# EUROPÄISCHE PATENTANMELDUNG

(11) **EP 1 970 187 A1**
(43) Veröffentlichungstag der Anmeldung: **17.09.2008**
(21) Anmeldenummer: 07012717.0
(22) Anmeldetag: 28.06.2007
(51) Int. Cl.: B29C 45/73, B29C 33/04, B29C 35/04

(54) **Verfahren zum Temperieren von Werkzeugen**

(30) Priorität: 15.03.2007 DE 102007012485
(71) Anmelder: Linde Aktiengesellschaft, 80807 München (DE); ISK GmbH, 58638 Iserlohn (DE)
(72) Erfinder: Berghoff, Markus, 58809 Neuenrade (DE); Kürten, Andreas, 58644 Iserlohn (DE); Orsén, Mikael, 23136 Trelleborg (SE); Praller, Andreas, 82110 Germering (DE)
(74) Vertreter: Gellner, Bernd

(57) **Zusammenfassung**

Die Erfindung betrifft ein Verfahren zum Temperieren eines Werkzeuges, insbesondere eines Spritzgusswerkzeuges, wobei das Werkzeug während einer Kühlphase gekühlt und während einer Heizphase beheizt wird. Als Temperiermedium kommt vorzugsweise Kohlendioxid zum Einsatz.

## Beschreibung

Die Erfindung betrifft ein Verfahren zum Temperieren eines Werkzeuges, insbesondere eines Spritzgusswerkzeuges, wobei das Werkzeug während einer Kühlphase gekühlt und während einer Heizphase beheizt wird.

Bei der Herstellung von Kunststoffteilen im Spritzgussverfahren wird eine thermoplastische Kunststoffmasse in ein Werkzeug, beispielsweise eine Spritzgussform, eingebracht, geformt und anschließend abgekühlt. Die Temperatur des Werkzeugs hat einen großen Einfluss auf die Qualität der hergestellten Kunststoffprodukte.

Aus der deutschen Patentschrift DE 199 18 428 C1 ist ein Verfahren zum Kühlen von solchen Werkzeugen zur Kunststoffverarbeitung bekannt. Die Kühlung des Werkzeugs erfolgt hierbei mit flüssigem Kohlendioxid, welches in Bohrungen oder andere Expansionsräume in dem Werkzeug geleitet und entspannt wird, wobei es dem Werkzeug Wärme entzieht.

In jüngster Zeit gewinnt die sogenannte variotherme Temperierung zunehmend an Bedeutung. Unter variothermer Temperierung versteht man eine gezielte Steuerung der Werkzeugtemperatur während des Kunststoffformprozesses. Die Werkzeugtemperatur wird nicht mehr konstant gehalten, sondern es wird ein definiertes Temperaturprofil gefahren, um die Qualität der hergestellten Teile weiter zu erhöhen.

So wird beim Spritzgussverfahren zum Zeitpunkt des Einspritzens der Kunststoffschmelze in das Werkzeug und während des Füllens der Form eine höhere Temperatur angestrebt, damit die Schmelze besser fließen kann. Nachdem die Form mit Kunststoff gefüllt ist, soll die Werkzeugtemperatur sehr schnell abgesenkt werden, um eine schnelle Erstarrung der Schmelze zu erreichen.

Beim klassischen Verfahren der variothermen Temperierung werden die unterschiedlichen Temperatumiveaus durch zwei verschieden temperierte Flüssigkeitskreisläufe erreicht. Als Heiz- bzw. Kühlmedien kommen beispielsweise Wasser oder Temperieröle zum Einsatz.

Weiter sind Kombinationen aus einer Flüssigkeitskühlung mit einer widerstandselektrischen oder induktiven Beheizung des Werkzeugs bekannt. Bei der widerstandselektrischen Beheizung wird die Wärme in einem elektrischen Heizelement erzeugt und über Wärmeleitung im Werkzeug verteilt. Die induktive Beheizung beruht auf der Wärmeerzeugung durch Wirbelströme, die durch elektromagnetische Wechselfelder hervorgerufen werden.

Die mit den bisherigen Verfahren erzielten Zykluszeiten bei der variothermen Temperierung sind deutlich länger als beim Standard-Spritzgießen ohne Werkzeugbeheizung. Lange Zykluszeiten bedeuten aber auch eine geringere Wirtschaftlichkeit. Zudem kann eine zu lange Verweildauer der Kunststoffschmelze in der Förderschnecke zu thermischen Schädigungen führen.

Aufgabe vorliegender Erfindung ist es daher, die variotherme Temperierung so zu verbessern, dass das Aufheizen und Abkühlen des Werkzeugs schneller erfolgt und kürzere Zykluszeiten erzielt werden.

Diese Aufgabe wird durch ein Verfahren der eingangs genannten Art gelöst, welches dadurch gekennzeichnet ist, dass das Werkzeug mit einem gasförmigen Heizmedium beheizt wird.

Das erfindungsgemäße Verfahren dient insbesondere zur Temperierung von Werkzeugen, die bei der Kunststoffverarbeitung und Herstellung von Kunststoffteilen zum Einsatz kommen. Hierzu gehören zum Beispiel Spritzgusswerkzeuge und -formen oder Spritzpräge- und Prägewerkzeuge.

Ein wesentliches Anwendungsgebiet der Erfindung ist die Verarbeitung von thermoplastischen Kunststoffen, wobei, wie eingangs beschrieben, während des Einspritzens der Kunststoffschmelze in die Form die Werkzeugtemperatur erhöht und nach dem Füllen der Form die Temperatur möglichst schnell abgesenkt werden soll.

Auch bei der Verarbeitung von Duroplasten und anderen vernetzenden Kunststoffen ist das erfindungsgemäße Verfahren vorteilhaft einsetzbar. Bei der Herstellung von Formteilen aus Duroplasten oder vernetzenden Kunststoffen ist die Vermeidung von Graten von besonderer Bedeutung. Solche Grate entstehen aufgrund der geringen Viskosität der vernetzenden Kunststoffmaterialien während der Füll- und Kompressionsphase. Auch beim Beheizen kleiner schlecht zugänglicher Kerne bei den vernetzenden Kunststoffen kann die Erfindung mit Vorteil eingesetzt werden.

Erfindungsgemäß werden daher die bei der Verarbeitung der vernetzenden Kunststoffe eingesetzten Werkzeuge oder Formen zeitweise beheizt. Bestehen die Werkzeuge aus zwei oder mehr Werkzeugteilen, in die das Kunststoffmaterial eingebracht wird und die dann zusammengepresst werden, so wird vorzugsweise der Bereich der Kontaktstellen der einzelnen Werkzeugteile erfindungsgemäß beheizt, um dort kurzzeitig ein höheres Temperaturniveau einzustellen und so die Viskosität der Kunststoffmasse zu erhöhen und die Vernetzungsreaktion zu beschleunigen.

Vorzugsweise wird das Werkzeug während der Kühlphase und während der Heizphase mit demselben Medium mit unterschiedlichen Temperaturen gekühlt bzw. beheizt. Auf diese Weise wird ein schnelles Umschalten von Kühlung auf Heizung des Werkzeugs möglich. So wird beispielsweise eine Form zur Kunststoffverarbeitung während des Einbringens von Kunststoffschmelze durch heißes gasförmiges Kohlendioxid beheizt. Das Kohlendioxidgas wird hierzu durch geeignet in die Form eingebrachte Temperierkanäle geleitet. Sobald die Form gefüllt ist, wird auf Kühlung umgeschaltet. Dazu muss lediglich kaltes, vorzugsweise flüssiges Kohlendioxid zugeführt werden, das in denselben Temperierkanälen expandiert und dadurch kühlt. In den Temperierkanälen noch befindliches warmes Kohlendioxidgas wird dabei durch das zugeführte kalte Kohlendioxid verdrängt.

Die Temperierung erfolgt bevorzugt dadurch, dass das Kühlmedium und das Heizmedium durch in dem Werkzeug befindliche Temperierkanäle geleitet werden. Hierbei ist es von Vorteil, wenn das Heizmedium während der Heizphase durch dieselben Temperierkanäle geleitet wird, durch die das Kühlmedium während der Kühlphase strömt. Auf diese Weise ist die erfindungsgemäße Temperierung technisch einfach zu realisieren, da zum Abkühlen und Beheizen des Werkzeugs dieselben Kanäle verwendet werden können.

Die Erfindung eignet sich auch zur Temperierung von Werkzeugen zur Behandlung oder Verarbeitung von Duroplasten.

Die Temperierkanäle können in weiten Grenzen beliebig gestaltet sein, beispielsweise mit rundem oder rechteckigem Querschnitt ausgeführt werden. Hinsichtlich der Querschnittsfläche der Temperierkanäle haben sich Werte zwischen 1 mm² und 100 mm² als günstig erwiesen.

Als Temperierkanäle können in das Werkzeug eingebrachte Bohrungen, Hohlräume oder Expansionsräume dienen, welche vorzugsweise mit einer ersten Öffnung zur Zuleitung des Kühl- oder Heizmediums und einer zweiten Öffnung zum Abziehen des Kühl- oder Heizmediums versehen sind. Es ist auch möglich, Hohlräume im Werkzeug vorzusehen, welche nur eine Zuleitung besitzen, über die das Kühl- oder Heizmedium sowohl zugeführt als auch wieder abgezogen wird.

Die Temperierkanäle werden bevorzugt mittels eines Fügeverfahrens oder durch Lasersintern hergestellt. Als geeignete Fügeverfahren haben sich hierbei zum Beispiel das Vakuumlöten oder das Diffusionsschweißen erwiesen.

Vorzugsweise wird das Werkzeug mit einem technischen Gas, bevorzugt mit einem inerten Gas, besonders bevorzugt mit Kohlendioxid, ganz besonders bevorzugt mit flüssigem Kohlendioxid, gekühlt. Weitere technische Gase, die erfindungsgemäß mit Vorteil eingesetzt werden können, sind Argon, Stickstoff oder Helium. Diese Gase haben den Vorteil, umweltverträglich, ungiftig und unbrennbar zu sein.

Grundsätzlich können aber auch andere Wärme- bzw. Kälteträger zur erfindungsgemäßen Werkzeugtemperierung genutzt werden. Hierzu gehören beispielsweise Ammoniak, N₂O, FCKW, teilhalogenierte oder teilfluorierte Kohlenwasserstoffe, wie R134a, Chlorkohlenwasserstoffe oder halogenfreie Kohlenwasserstoffe. Im Rahmen der vorliegenden Erfindung haben sich jedoch technische Gase und hierunter vor allem Kohlendioxid als geeignetste Kühl- bzw. Heizmedien erwiesen. Insbesondere mit flüssigem Kohlendioxid werden sehr hohe Abkühlgeschwindigkeiten erzielt.

Beim Einsatz von Kohlendioxid als Kühlmedium wird dem Werkzeug flüssiges Kohlendioxid unter Druck zugeführt und entspannt und die dabei entstehende Entspannungskälte genutzt, um das Werkzeug zu kühlen. In diesem Fall ist es besonders günstig, wenn Kohlendioxid auch als Heizmedium verwendet wird. Hierzu wird gasförmiges Kohlendioxid in direkten Wärmeaustauschkontakt mit dem Werkzeug gebracht, um dieses zu erwärmen.

Von Vorteil wird das gasförmige Kohlendioxid vor dem direkten Kontakt mit dem Werkzeug erwärmt. Als Heizvorrichtung zum Anwärmen des gasförmigen Kohlendioxids eignen sich insbesondere elektrisch oder mit Gas betriebene Erwärmer/Erhitzer.

Das Heizmedium, beispielsweise gasförmiges Kohlendioxid, besitzt bevorzugt eine Temperatur zwischen 50 °C und 500 °C. Der Druck des Heizmediums wird vorteilhaft zwischen 10 bar und 400 bar gewählt. Unter diesen Bedingungen ist ein schnelles Aufwärmen des Werkzeugs möglich.

Zur Senkung der Betriebskosten hat es sich als günstig erwiesen, einen geschlossenen Kreislauf für das Kühlmedium und/oder das Heizmedium vorzusehen. Das Kühlmedium bzw. das Heizmedium werden hierbei, nachdem sie das Werkzeug durchströmt haben und dieses abgekühlt bzw. angewärmt haben, einer mehrmaligen Verwendung als Kühl- bzw. Heizmedium zugeführt. Ein Heizkreislauf könnte zum Beispiel so aussehen, dass heißes gasförmiges Kohlendioxid als Heizmedium dem Werkzeug zugeführt wird, dort Wärme in direktem Wärmeaustausch mit dem Werkzeug abgibt, vom Werkzeug abgezogen und wieder erwärmt mit, um dann erneut als Heizmedium zu dienen. Entsprechendes gilt für einen Kohlendioxid-Kühlkreislauf.

Wird flüssiges Kohlendioxid zum Kühlen des Werkzeugs verwendet, hat es sich auch als zweckmäßig erwiesen, das beim Kühlen des Werkzeugs verdampfende Kohlendioxid extern zu erwärmen und anschließend als Heizmedium zum Beheizen des Werkzeugs einzusetzen.

Die Erfindung eignet sich vor allem zur Herstellung folgender Bauteile aus Kunststoff:
- Dünnwandige Teile mit hohen Aspektverhältnissen, das heißt langen Fließwegen für die Kunststoffschmelze,
- Teile mit mikrostrukturierten Oberflächen,
- dickwandige Teile mit hohen Anforderungen an die Oberflächenqualität.

Die Erfindung hat zahlreiche Vorteile gegenüber den bisherigen Verfahren zur variothermen Temperierung:
- deutliche Verkürzung der Zykluszeiten
- einfache technische Realisierbarkeit
- geringe Investitionskosten
- Verwendung derselben Temperierkanäle für das Heizmedium und für das Kühlmedium
- nur ein Temperiermedium erforderlich

## Patentansprüche

1. Verfahren zum Temperieren eines Werkzeuges, insbesondere eines Spritzgusswerkzeuges, wobei das Werkzeug während einer Kühlphase gekühlt und während einer Heizphase beheizt wird, **dadurch gekennzeichnet, dass** das Werkzeug mit einem gasförmigen Heizmedium beheizt wird.

2. Verfahren nach Anspruch 1, **dadurch gekennzeichnet, dass** das Werkzeug während der Kühlphase und während der Heizphase mit demselben Medium mit unterschiedlichen Temperaturen gekühlt bzw. beheizt wird.

3. Verfahren nach einem der Ansprüche 1 oder 2, **dadurch gekennzeichnet, dass** das Werkzeug mit einem technischen Gas, bevorzugt Kohlendioxid, besonders bevorzugt flüssigem Kohlendioxid, gekühlt wird.

4. Verfahren nach einem der Ansprüche 1 bis 3, **dadurch gekennzeichnet, dass** das Werkzeug mit gasförmigem Kohlendioxid als Heizmedium beheizt wird.

5. Verfahren nach einem der Ansprüche 1 bis 4, **dadurch gekennzeichnet, dass** das Heizmedium eine Temperatur zwischen 50 °C und 500 °C besitzt.

6. Verfahren nach einem der Ansprüche 1 bis 5, **dadurch gekennzeichnet, dass** der Druck des Heizmediums zwischen 10 bar und 400 bar beträgt.

7. Verfahren nach einem der Ansprüche 1 bis 6, **dadurch gekennzeichnet, dass** das Werkzeug mittels eines Kühlmediums gekühlt wird, wobei das Kühlmedium während der Kühlphase durch in dem Werkzeug befindliche Temperierkanäle geleitet wird, und dass während der Heizphase das Heizmedium durch dieselben Temperierkanäle geleitet wird.

8. Verfahren nach Anspruch 7, **dadurch gekennzeichnet, dass** die Temperierkanäle durch ein Fügeverfahren oder Lasersintern hergestellt werden.

9. Verfahren nach einem der Ansprüche 1 bis 8, **dadurch gekennzeichnet, dass** das Heiz- und/oder das Kühlmedium im Kreis geführt werden.
